# EUROPEAN PATENT SPECIFICATION

(11) **EP 3 289 934 B1**
(45) Date of publication and mention of the grant of the patent: **27.02.2019**
(21) Application number: 17187816.8
(22) Date of filing: 24.08.2017
(51) Int. Cl.: A47J 27/00, H05B 6/12

(54) **MULTI-FUNCTION COOKING UTENSIL HAVING WATER PURIFYING FUNCTION**
MULTIFUNKTIONELLES KOCHGERÄT MIT WASSERREINIGUNGSFUNKTION
USTENSILE DE CUISSON MULTIFONCTION AYANT UNE FONCTION DE PURIFICATION D'EAU

(30) Priority: 30.08.2016 KR 20160111026
(43) Date of publication of application: 07.03.2018
(73) Proprietor: Bumil Industrial Co. Ltd., Incheon 21628 (KR)
(72) Inventor: SHIN, Young Suk, 21665 Incheon (KR); JEON, Jong Min, 21185 Incheon (KR)
(74) Representative: Rüger Abel

(56) References cited:
- KR-A- 20110 077 402
- KR-B1- 101 450 238
- KR-B1- 101 566 856
- KR-U- 20080 000 250
- US-A1- 2015 342 391

## Description

### [Technical Field]

The present invention relates to a multi-function cooking utensil having a water purifying function, and more particularly, to a multi-function cooking utensil having a water purifying function that is capable of supplying purified water or hot water to food according to cooking methods for the food, heating a cooking container in which the food is put, and cooking the food in the cooking container.

### [Background Art]

So as to cook food, generally, the food and water are put into a cooking container, and then, the cooking container is heated to cook the food put therein. However, there is no separate cooking utensil at convenience stores, large-scale discount stores, supermarkets and so on. In most cases, accordingly, instant food products to which water is poured are cooked, and food products are heated up and cooked through a microwave oven.

Since no separate cooking utensil is prepared at convenience stores, large-scale discount stores, supermarkets and so on, that is, no food except the instant food products can be cooked and sold there.

So as to solve the above-mentioned problems, an automatic ramen (a kind of instant noodles) cooker having a form of a vending machine is disclosed in Korean Patent Nos.0318063 and 0325418.

Document US 2015/342391 A1 discloses a ramen cooker with water filter and induction heating. The conventional automatic ramen cooker is very convenient in use, but it is complicated in configuration and also very expensive. Moreover, the conventional automatic ramen cooker makes users become passive. That is, the conventional automatic ramen cooker can cook only the ramen selected by the users, which causes many limitations in selecting various kinds of ramen noodles supplied in a wide range.

Further, the automatic ramen cookers, which have been developed up to now, have the limitations in cooking using the addition of various materials. That is, the automatic ramen cookers developed up to now are difficult to cook the ramen by addition of an egg, leek and so on according to the user's preference.

Accordingly, he or she adopts a conventional manner wherein general ramen, not instant ramen like cup ramen, is selected and various materials like an egg, leek and so on are added to the ramen, according to his or her preference. According to the conventional ramen cooking manner, that is, water is poured into a pot, and ramen cooking is carried out through a gas range.

In the conventional ramen cooking manner, however, it is necessary to pour water into the pot, heat the water, and cook ramen in the pot, which makes the cooking very inconvenient, and especially, it is hard that the conventional ramen cooking manner is adopted in a public place such as PC rooms, stores and so on.

So as to solve the above-mentioned problems, an easy cooker for ramen as first prior art is disclosed in Korean Patent No.0580150 (dated on May 15, 2006), which includes: a preheated water tank for receiving preheated water needed for cooking ramen from a preheater to store the preheated water therein; a heater unit having a cooking heater adapted to seat a cooking container in which ramen and powder are put thereon, a fixing bracket disposed on one side of the cooking heater, a pressing member rotatably disposed with respect to the fixing bracket and having a portion protruding toward the top of the cooking heater, and a switch disposed between the fixing bracket and the pressing ruler in such a manner as to be turned on according to the rotation of the pressing member; water supply means for feeding the stored water in the preheated water tank to the cooking container seated on the cooking heater and having a water supply valve; a ramen water temperature controller for sensing the temperature of the water stored in the preheated water tank and controlling the preheater according to the sensed temperature to allow the temperature of the water stored in the preheated water tank to be maintained at a ramen water preheated temperature; and a cooking heater temperature for sensing the temperature of the cooking heater, controlling the cooking heater according to the sensed temperature to allow the temperature of the cooking heater to be maintained at the ramen water preheated temperature, and if the pressing member is rotated to turn on the switch after the cooking container in which the ramen and powder are put is seated on the cooking heater, raising the temperature of the cooking heater to a ramen cooking temperature to maintain the raised temperature by the time adequate for the ramen cooking.

According to the first prior art, a main water tank is located on the upper portion of the easy cooker for ramen, and accordingly, the center of gravity of the cooker is on the upper portion of the cooker, so that if the cooker is touched by a user while the ramen is being cooked, it may fall forward or backward.

Further, water vapor is generated from the ramen cooked through the heater unit and is raised toward a water supply faucet, so that dust or foreign matters sticking to the water vapor may be attached to the water supply faucet, thereby making it inconvenient to often clean the water supply faucet. Of course, the dust or foreign matters may enter the water supply faucet, thereby causing the ramen cooking to be carried out in an unsanitary state.

So as to solve the above-mentioned problems the first prior art has had, a ramen cooker as second prior art is disclosed in Korean Utility Model Application Laid-open No.2008-0000250 (dated on March 3, 2008), which includes: a water tank for supplying water; a hot water tank for storing high temperature water and having a heater attached thereto; a nozzle for supplying the high temperature water to a ramen container according to the opening and closing of a solenoid valve; a heating plate for heating the ramen container; a sensor for sensing the existence and non-existence of the ramen container; a sensor for sensing the operation of an auxiliary base; an external structure for attaching steel plates as a front surface and side surfaces to a support as an aluminum profile in such a manner as to be easily exchanged or changed; a display for displaying a ramen cooking state; buttons for selecting ramen cooking processes; and a printed circuit board for controlling the ramen cooking, wherein the auxiliary base has a spring attached thereto to separate the ramen container in which no water is put from the heating plate and operates according to the gravity of water in the ramen container.

According to the second prior art, also, the water vapor generated while the ramen is being boiled is introduced into the nozzle from which water is supplied, and dust and foreign matters are attached to the water vapor introduced into the nozzle, thereby undesirably causing the water supply in an unsanitary state.

Besides, even the surrounding portions around the nozzle may be contaminated with the dust and foreign matters attached to the water vapor or the soup spattering during the ramen cooking, thereby undesirably causing the ramen cooking to be carried out in a more unsanitary state.

So as to solve the above-mentioned problems the second prior art has had, a cooker combined with a cold/hot water dispenser as third prior art is disclosed in Korean Patent Application Laid-open No.2011-0077402 (dated on July 7, 2011), which includes: filtering means for receiving raw water to purify the raw water; a purified water tank for storing the purified water passing through the filtering means; a cold water tank for receiving the purified water from the purified water tank and cooling the purified water through a cooler to store the cold water therein; a hot water tank for receiving the purified water from the purified water tank and heating the purified water through a heater to store the hot water therein; a purified water unit connected to the cold water tank and the hot water tank, respectively, and having cold and hot water valves for discharging the cold water and hot water; a cooking unit disposed below the front side of the purified water unit and having a cooking plate located on top thereof to heat a cooking container coming into contact therewith and an electric heater as a heating source located at the inside thereof; a ventilation fan located on the front surface of the purified water unit to convey the heat and water vapor generated upon the food cooking in the cooking unit to the outside; and heat insulating members located on the edges of the cooking plate of the cooking unit to block heat transfer and having a shock absorbing function.

According to the third prior art, the electric heater is located in the cooking unit on which the cooking container is placed, and the heating for the cooking container is carried out by the electric heater, so that the transfer of the heating source is blocked by means of the heat insulating members. Since the thicknesses of the heat insulating members are relatively low, however, it is impossible to completely block the transfer of the heating source.

After the cooking, further, the heat generated from the electric heater still remains, and if no cover is placed on the cooking unit, a burn may be caused by the residual heat of the electric heater.

In the state where the cover is not placed on the cooking unit, also, power is continuously applied to the electric heater, thereby undesirably causing the electric heater to be overheated, and so as to prevent the application of power from being kept, accordingly, the cooker should be checked carefully whenever it is used, thereby making a user feel inconvenient in use.

According to the third prior art, moreover, it is hard to install the cooker at a place where a water supply line for supplying water cannot be connected to the cooker.

### [Disclosure]

### [Technical Problem]

Accordingly, the present invention has been made in view of the above-mentioned problems occurring in the prior art, and it is an object of the present invention to provide a multi-function cooking utensil having a water purifying function that is capable of supplying water from a water supply line or water bottle according to surrounding environments thereof to cook food with the supplied water.

It is another object of the present invention to provide a multi-function cooking utensil having a water purifying function that is capable of preventing a user from being burned due to residual heat after food cooking.

It is yet another object of the present invention to provide a multi-function cooking utensil having a water purifying function that is capable of allowing food cooking to be continuously carried out for a given period of time through reheating in the state where the cooking time set therein is exceeded.

### [Technical Solution]

To accomplish the above-mentioned objects, according to the present invention, there is provided a multi-function cooking utensil having a water purifying function including: a water supply unit for feeding the water supplied from a tap or water bottle as hot water or purified water according to a user's selection to allow food to be cooked with the hot water or purified water; a cooking unit adapted to cook the food with the water fed to a cooking container and located on the underside of the water supply unit to prevent the user from being burned due to residual heat after food cooking; and a control unit disposed on the water supply unit and the cooking unit to control water supply and heating time and temperature for cooking the food in the cooking container, wherein the cooking unit includes: a cooking unit body having a shape of a flat plate to locate the utensil body on top thereof, having tempered glass or heat resistant glass disposed on one side thereof to place the cooking container thereon, having a given space formed at the inside thereof, and being open on one side thereof; a cooking unit cover detachably disposed on the open portion of the cooking unit body; and a heating part disposed inside the cooking unit body and having a circular support plate disposed under the cooking unit body and having support pieces, fixing pieces, and coupling grooves, and coil fixing holes, coils located on top of the support plate to cook the food in the cooking container through electromagnetic induction heating, fixing plates located on tops of the coils in such a manner as to be coupled to the support plate, and ferrite cores insertedly disposed on the underside of the support plate.

According to the present invention, desirably, the water supply unit includes: a utensil body having a given space formed at the inside thereof in such a manner as to be open on one side thereof and having a discharge valve disposed on the front surface thereof to supply water; a body cover detachably mounted on the open portion of the utensil body and having a plurality of nipples adapted to couple hoses thereto so as to connect the hoses to the tap or the water bottle; a plurality of filters disposed on one side of the body cover by means of a filter clip to purify the water; a distributor connected to the filters to dividedly supply the water supplied through the filters to the discharge valve to the form of purified water or hot water; a water storage tank located inside the utensil body to store the water supplied from the filters through the distributor by a given amount; a hot water tank located under the water storage tank in such a manner as to store the water supplied from the water storage tank by a given amount and having a heater adapted to heat the water stored therein; a first solenoid valve adapted to supply the hot water supplied from the hot water tank to the discharge valve to cook the food; and a second solenoid valve disposed inside the utensil body in such a manner as to be located between the discharge valve and the distributor to supply the water from the filters and the distributor to the discharge valve and having a pressure control valve mounted thereon.

According to the present invention, desirably, the filter clip includes: a flat panel fixed to one side of the body cover by means of bolts; and a plurality of 'Ω'-shaped clip members disposed on one side of the flat panel to fix the filters thereto.

According to the present invention, desirably, the water supply unit supplies the water supplied from the pressure of the tap or from the water bottle by means of a pump to the water storage tank through the filters and the distributor, stores the water by the given amount in the water storage tank, heats the water in the hot water tank, and selectively supplies the hot water fed from the hot water tank to the cooking container through the first solenoid valve and the discharge valve and the water purified through the filters and the distributor and reduced in pressure through the second solenoid valve and the pressure control valve to the discharge valve.

According to the present invention, desirably, the utensil body includes a ventilation fan adapted to prevent the water vapor generated from the food during cooking from being introduced into the discharge valve, the ventilation fan being electrically connected to a main controller so that blowing occurs toward the front surface of the utensil body only when power is applied to the heating part.

According to the present invention, desirably, the control unit includes: the main controller for carrying out the cooking container existence/nonexistence checking, the control of the first solenoid valve or the second solenoid valve adapted to supply purified water or hot water, and the control of the heater so as to cook the food if a button part disposed on the front surface of the utensil body is manipulated by the user; the button part disposed on the front surface of the utensil body and having a cooking button, an instant cooking button, a general cooking button, a start/stop button, a hot water button, a purified water button, a time adding button, and a display; a sensor disposed on the front surface of the utensil body in such a manner as to be electrically connected to the main controller to check whether the cooking container is located on the heating part and thus to allow the button part to be activated or deactivated; and a heating part controller electrically connected to the main controller to control the heating part for food cooking, wherein the main controller is formed of a PCB located inside the utensil body and the heating part controller is formed of a PCB located inside the cooking unit body.

### [Advantageous Effects]

According to the present invention, the water for cooking food is supplied from a tap or water bottle according to surrounding environments of the multi-function cooking utensil, and the food is cooked with the supplied water, so that the multi-function cooking utensil can be disposed, without any limitation in installation places.

According to the present invention, further, food cooking is carried out through the electromagnetic induction heating so as to prevent the user from being burned due to the residual heat after the food cooking, so that a burn caused by the residual heat cannot be applied to him or her.

According to the present invention, furthermore, the food cooking is continuously carried out for a given period of time through reheating in the state where the cooking time set in the multi-function cooking utensil is exceeded, so that there is no need to return to the initial step for the food cooking.

According to the present invention, in addition, the buttons for controlling the multi-function cooking utensil are locked during the food cooking, so that no change in the functions of the cooking utensil occurs during the food cooking.

According to the present invention, also, even if the buttons for selecting the functions are pressed in the state where the cooking container is not placed on the multi-function cooking utensil, they are in a deactivated state, so that sudden supply of hot water can be prevented.

### [Description of Drawings]

FIG.1 is a perspective view showing a multi-function cooking utensil having a water purifying function according to the present invention.
FIG.2 is an exploded perspective view showing the multi-function cooking utensil having a water purifying function according to the present invention.
FIG.3 is a sectional view showing the multi-function cooking utensil having a water purifying function according to the present invention.
FIG.4 is a sectional view showing the use state of the multi-function cooking utensil having a water purifying function according to the present invention.
FIG.5 is a block diagram showing a control unit of the multi-function cooking utensil having a water purifying function according to the present invention.
FIG.6 is a flowchart showing a food cooking procedure using the multi-function cooking utensil having a water purifying function according to the present invention.

### [Mode for Invention]

Hereinafter, an explanation on a multi-function cooking utensil having a water purifying function according to the present invention will be in detail given with reference to the attached drawing.

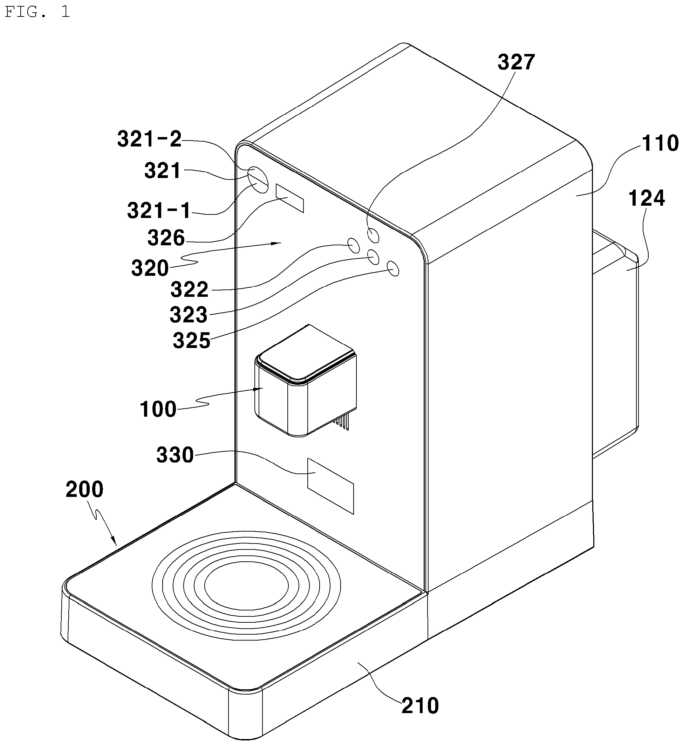

According to the present invention, a multi-function cooking utensil having a water purifying function is configured as shown in FIGS.1 to 4.

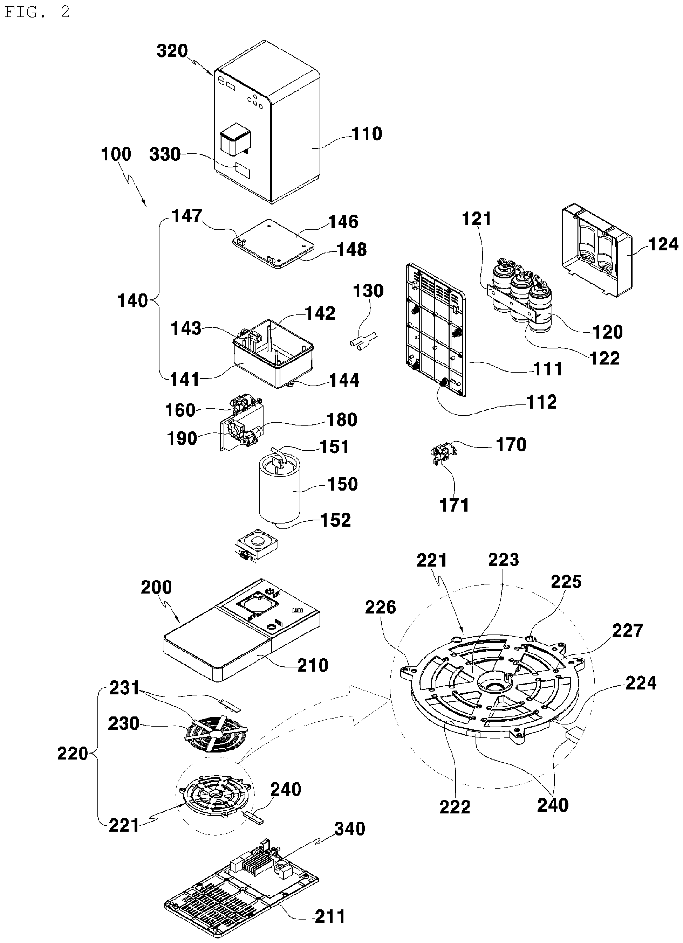

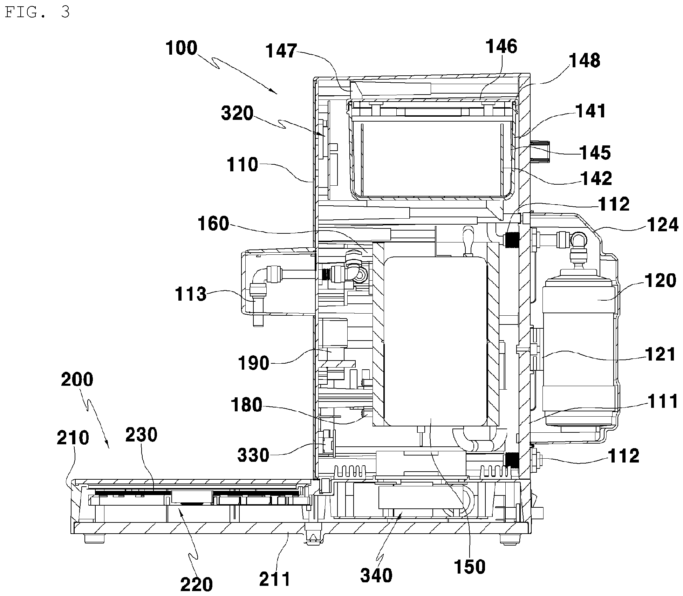

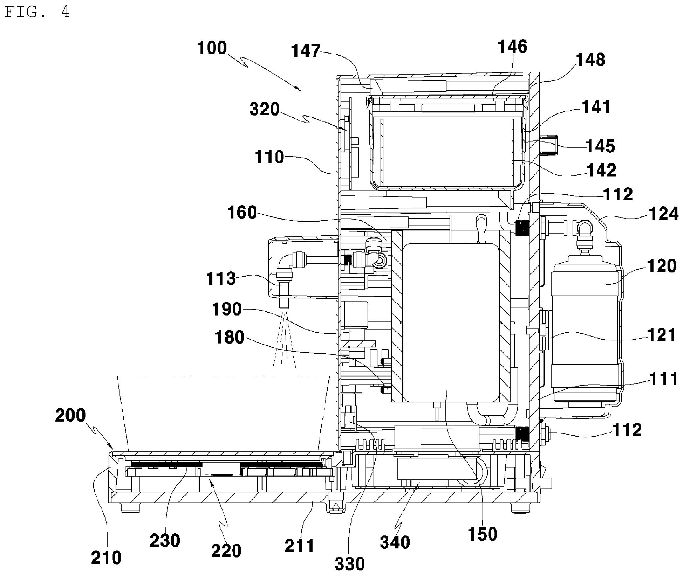

FIG.1 is a perspective view showing a multi-function cooking utensil having a water purifying function according to the present invention, FIG.2 is an exploded perspective view showing the multi-function cooking utensil having a water purifying function according to the present invention, FIG.3 is a sectional view showing the multi-function cooking utensil having a water purifying function according to the present invention, and FIG.4 is a sectional view showing the use state of the multi-function cooking utensil having a water purifying function according to the present invention.

As shown in FIGS.1 to 4, a multi-function cooking utensil having a water purifying function according to the present invention includes: a water supply unit 100 for feeding the water supplied from a tap or water bottle as hot water or purified water according to a user's selection to allow food to be cooked with the hot water or purified water; a cooking unit 200 adapted to cook the food with the water fed to a cooking container and located on the underside of the water supply unit 100 to prevent the user from being burned due to residual heat after food cooking; and a control unit 300 disposed on the water supply unit 100 and the cooking unit 200 to control water supply and heating time and temperature for cooking the food in the cooking container.

The water supply unit 100 largely includes a utensil body 110, a body cover 111, filters 120, a distributor 130, a water storage tank 140, a hot water tank 150, a first solenoid valve 160, and a second solenoid valve 170.

As shown, the utensil body 110 has a generally rectangular parallelepiped that is open on one side thereof and has a given space formed at the inside thereof. Of course, the utensil body 110 is not limited in shape thereto, and it may have various shapes. Further, the utensil body 110 may be formed integrally with a cooking unit body 210 of the cooking unit 200, thereby having a shape of an approximate 'L'.

The body cover 111 is detachably mounted on the open portion of the utensil body 110 and has a plurality of nipples 114 adapted to couple hoses thereto when water is supplied from the filters 120.

Further, the utensil body 110 has a discharge valve 113 disposed on the front surface thereof to supply the purified water through the filters 120 or the water heated through the hot water tank 150.

The filters 120 are disposed on one side of the body cover 111 to purify the water supplied from the tap or water bottle. The filters 120 have a filter clip 121 disposed on one side thereof, so that they can be mounted on the body cover 111, and the filter clip 121 has a flat panel 122 adapted to come into close contact with the body cover 111 and a plurality of 'Ω'-shaped clip members 123 formed integrally with one side of the flat panel 122, so that the filters 120 can be detachably mounted on one side of the body cover 111.

Further, the filters 120 have a filter cover 124 disposed on one side thereof to prevent their exposure and escape from the filter clip 121 to the outside and also to prevent dust and foreign matters from being introduced thereinto, so that the filters 120 can be located in a sanitary state.

The filter cover 124 is open on one side thereof, has a given space formed at the inside thereof, and protrudes toward one side thereof like the shape of the filters 120 to allow a portion at which the filters 120 are located to be easily recognized, thereby making it easy to exchange the filters 120 into new ones.

The distributor 130 is adapted to distribute the water supplied through the filters 120 to the discharge valve 113 to the form of hot water or purified water. So as to distribute the water to the water storage tank 140 and the discharge valve 113, one side of the distributor 130 is connected to the water storage tank 140 and the second solenoid valve 170 through a hose (having no reference numeral), and the other side thereof is connected to the filters 120 through a hose. The distributor 130 has a shape of any one of 'Y' and 'T'.

The water storage tank 140 is located inside the utensil body 110 to always store the water supplied from the filters 120 through the distributor 130 by a given amount and to supply the stored water to the hot water tank 150. The water storage tank 140 includes a water tank 141 open on one side thereof and having a given space formed at the inside thereof to store water therein, and the water tank 141 has a plurality of fixing protrusions 142 formed therein, a supply nipple 143 for receiving the water from the distributor 130, and a discharge nipple 144 for discharging the water to the hot water tank 150.

The water tank 141 has a water tank cover 146 located on top thereof in such a manner as to have the shape corresponding to the shape of the top side thereof. Further, the water tank cover 146 is coupled to the top side of the water tank 141 to prevent the water stored in the water tank 141 from overflowing.

Even if not shown in the drawing, moreover, a valve is mounted on the water tank 141 to supply water to the hot water tank 150 or to block the water supplied to the hot water tank 150.

The water tank cover 146 has a plurality of fixing protrusions 147 formed on top thereof in such a manner as to be fixed to the inside of the utensil body 110 by means of bolts, and accordingly, the water tank 141 is fixed to the utensil body 110.

The water tank cover 146 has coupling grooves 148 formed along the underside edges thereof in such a manner as to be coupled to the top edges of the water tank 141, and after silicone packing materials are coupled to the coupling grooves 148, they are fitted to the top edges of the water tank 141, thereby preventing the water stored in the water tank 141 from overflowing.

The hot water tank 150 is located under the water storage tank 140 and has a shape of a cylinder having a given space formed at the inside thereof to store water therein. Further, the hot water tank 150 has a heater 153 adapted to heat the water stored therein. Moreover, the hot water tank 150 has a water inlet 151 and a water outlet 152 formed thereon to introduce and discharge water thereinto and therefrom.

The first solenoid valve 160 is located inside the utensil body 110 to supply the hot water supplied from the hot water tank 150 to the discharge valve 113 and thus to discharge the hot water to the outside.

So as to allow the purified water to be supplied when the user cooks food, the second solenoid valve 170 is located inside the utensil body 110 in such a manner as to be connected to the filters 120 and the discharge valve 113 through hoses.

Further, the second solenoid valve 170 has a pressure control valve 171 disposed thereon to reduce the pressure of the purified water to a given pressure.

Further, a pump 180 is located inside the utensil body 110 to supply the water in the water bottle to the water tank 141 or the discharge valve 113, and the pump 180 is electrically connected to the control unit 300 and is under the control of the control unit 300.

Furthermore, a ventilation fan 190 is located inside the utensil body 110 in such a manner as to perform forward blowing to prevent the water vapor generated from the cooked food in the cooking unit 200 from being introduced into the discharge valve 113. Also, the ventilation fan 190 is electrically connected to a main controller 310, so that desirably, blowing occurs only when power is applied to a heating part 220 of the cooking unit 200.

Through the formation of the ventilation fan 190, accordingly, the water vapor generated in the process where the food or ramen put in the cooking container is cooked is not introduced into the portion at which the discharge valve 113 is located, thereby allowing the sanitary cooking state to be maintained.

The cooking unit 200 has a shape of a flat plate to allow the utensil body 110 to be located on top thereof and has tempered glass or heat resistant glass disposed on one side thereof. The cooking unit 200 includes the cooking unit body 210 open on one side thereof and having a given space formed at the inside thereof, a cooking unit cover 211 detachably disposed on the open portion of the cooking unit body 210, and the heating part 220 disposed under the portion where the tempered glass or the heat resistant glass of the cooking unit body 210 is located to apply heat to the cooking container through electromagnetic induction heating and thus to cook the food in the cooking container.

The heating part 220 includes a support plate 221, coils 230, and ferrite cores 240.

The support plate 221 has a shape of a general circle and includes support pieces 222 formed radially thereon, fixing pieces 223 spaced apart from each other on each support piece 222, and coupling grooves 224 formed on the undersides of the fixing pieces 223 to couple the ferrite cores 240 thereto.

Further, the support plate 221 has a plurality of coil fixing holes 225 formed along one side periphery thereof in such a manner as to connect the ends of the coils 230 to a heating part controller 340 and a plurality of fixing protrusions 226 protruding outwardly therefrom and having screw holes, so that the support plate 221 can be fixed to the cooking unit body 210.

The support plate 221 has a plurality of fitting holes 227 formed thereon to fit the coils 230 disposed spirally thereto.

The coils 230 are located on top of the support plate 221 at a given distance to cook the food through the electromagnetic induction heating. The coils 230 are electrically connected to the heating part controller 340 and receive power to cook the food or ramen in the cooking container through the electromagnetic induction heating.

Further, the coils 230 have a plurality of fixing plates 231 each having a plurality of fixing protrusions formed thereon in such a manner as to be fixed to top of the support plate 221. The fixing plates 231 are coupled to the plurality of fitting holes 227 formed on the support plate 221 to fix the coils 230 to the support plate 221.

The ferrite cores 240 are fixed to the coupling grooves 224 formed on the support pieces 222 of the circular support plate 221.

The control unit 300 includes the main controller 310 for performing cooking container existence/nonexistence checking, the control of the first solenoid valve 160 or the second solenoid valve 170 adapted to supply purified water or hot water, and the control of the heater 153 so as to cook the food if a button part 320 disposed on the front surface of the utensil body 110 is manipulated by the user, the button part 320 disposed on the front surface of the utensil body 110 to allow the food or ramen cooking, water adding, or time adding to be selectively carried out through the user, and the heating part controller 340 electrically connected to the main controller 310 to control the heating part 220 for food cooking.

The main controller 310 includes a memory (not shown) in which a program is stored to cook the food or ramen if the button part 320 disposed on the front surface of the utensil body 110 is manipulated by the user, a microcomputer (not shown) for reading out the program stored in the memory to control the cooking for the food or ramen according to the manipulation of the button part 320, and a power part (not shown) for supplying power needed for the microcomputer, the heater 153, the pump 180, the heating part 220, the button part 320, and a sensor 330.

The main controller 310 has the sensor 330 disposed on the front surface of the utensil body 110 to check whether the cooking container is located on the heating part 220.

The button part 320 is disposed on the upper side of the front surface of the utensil body 110 so as to allow general food cooking or ramen cooking to be selected, so that in the state where the cooking container is not located on the cooking unit body 210, the button part 320 are not activated, but only when the cooking container is located thereon, the button part 320 is activated.

The button part 320 includes a cooking button 321 for selecting the food cooking or ramen cooking, a start/stop button 322 for starting the food cooking or ramen cooking in the state where the cooking button 321 is selected, a hot water button 323 for adding water when additional water is needed during the general food cooking or the ramen cooking, a purified water button 327 for adding purified water, not hot water, and a time adding button 325 for setting given time for the cooking by the user or for adding time required for the cooking.

The cooking button 321 includes an instant cooking button 321-2 for cooking convenient food sold at convenience stores, large-scale discount stores, supermarkets, and so on and a general cooking button 321-1 for cooking ramen. As the cooking button 321 is divided into the instant cooking button 321-2 and the general cooking button 321-1, cooking time and amount of water are adjusted and supplied according to the buttons.

Further, the button part 320 includes a display 326 adapted to display cooking time.

General cooking is selected by the cooking button 321 of the button part 320, and after cooking time is set and the amount of water is adjusted, the start/stop button 322 is pressed to start cooking. At this time, the whole time is displayed on the display 326, and then, the time on the display 326 is counted.

After only the amount of water is adjusted, without any adjustment in the cooking time, if the start/stop button 322 is pressed, the cooking time is counted, while the cooking is starting.

If the cooking starts to allow a cooking temperature to reach 200°C, power supply is automatically blocked by the control unit 300, so that the cooking temperature is not raised anymore.

Ramen cooking is selected by the general cooking button 321-2 of the cooking button 321, and if the start/stop button 322 is pressed, 400 ml of water is supplied through the discharge valve 113 according to the program stored in the memory of the control unit 300, and 3 minutes and 30 seconds are automatically set. At this time, the time on the display 326 is counted, and at the same time, power is applied to the heating part 220 to start the ramen cooking through the electromagnetic induction heating.

If water or time is additionally selected by the user, 50 ml of water and 30 seconds are added.

The heating part controller 340 is adapted to apply power to the coils 230 or to block the power application to the coils 230 through signals applied from the main controller 310.

Further, the heat generated from the heating part controller 340 is discharged to the outside of the cooking unit body 210 through a heat sink and a fan, thereby preventing the occurrence of malfunctions caused by the heat.

Even if not explained in the above-mentioned configuration, a shape of a fire pot is provided to the tempered glass or heat resistant glass disposed on top of the cooking unit body 210 by means of powder coating so as to generate heat from cooking containers not heated by the electromagnetic induction heating, like general glass containers.

If the shape of the fire pot is coated with a metal material by means of the powder coating, the electromagnetic induction heat is generated from the coils 230 and the ferrite cores 240, so that food or ramen can be cooked, without using any container made of a metal material containing iron.

A power switch 112 and a fuse (not shown), which are not explained in the drawing, are located on one side of the cooking unit cover 211. The power switch 112 is located on the heating part controller 340 formed of a PCB to supply normal power or to block the supply of the normal power, and the fuse is located on the heating part controller 340 formed of the PCB to block the supply of the normal power when an overcurrent is generated, thereby protecting the cooking utensil from the overcurrent.

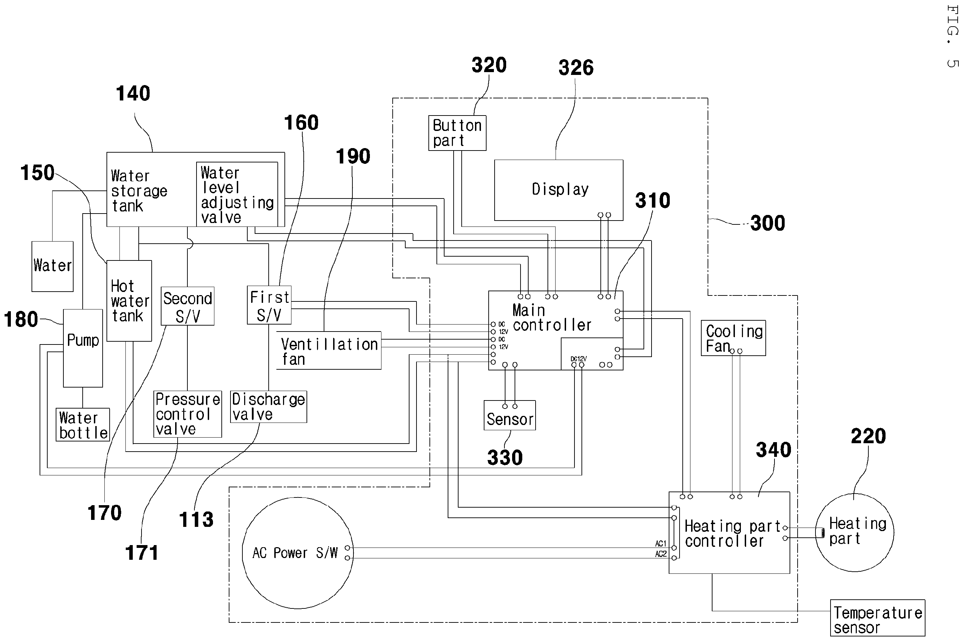

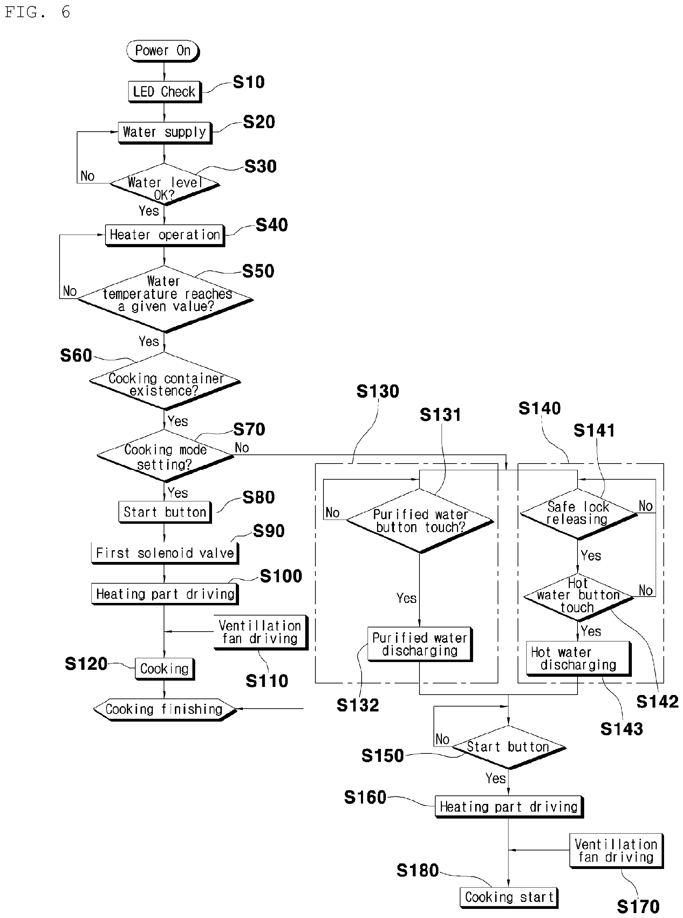

Under the above-mentioned configuration, now, an explanation on the food cooking procedure using the multi-function cooking utensil according to the present invention will be given with reference to FIGS.5 and 6.

FIG.5 is a block diagram showing a control unit of the multi-function cooking utensil having a water purifying function according to the present invention, and FIG.6 is a flowchart showing a food cooking procedure using the multi-function cooking utensil having a water purifying function according to the present invention.

Now, a process for installing the multi-function cooking utensil having a water purifying function according to the present invention and a process for cooking food (instant food or general food) will be explained.

In the state where the multi-function cooking utensil according to the present invention is located at a given place in a store, first, it is connected to the tap or water bottle so as to receive the water supplied therefrom.

The power switch 112 located on the rear surface of the multi-function cooking utensil according to the present invention is turned on to apply power to the main controller 310 of the control unit 300.

If the power is applied to the main controller 310 of the control unit 300, the cooking button 321, the instant cooking button 321-2, the general cooking button 321-1, the start/stop button 322, the hot water button 323, the time adding button 325, and the purified water button 327 of the button part 320 are all lightened for 3 seconds at step S10.

After the buttons of the button part 320 are lightened, the purified water through the filters 120 is supplied to the water tank 141 of the water storage tank 140 through the pump 180, and the water supplied to the water tank 141 is supplied to the hot water tank 150 at step S20.

The water supplied to the water tank 141 is introduced into the hot water tank 150, and next, it is determined whether the purified water introduced into the hot water tank 150 reaches a maximum level at step S30. If it is determined that the purified water does not reach the maximum level, water supply is kept.

If it is determined that the purified water supplied to the hot water tank 150 reaches the maximum level, the operation of the pump 180 stops to block water supply, and at the same time, the electrical signal is applied from the main controller 310 to the heater 153, thereby heating the water in the hot water tank 150 at step S40.

Next, it is determined by the main controller 310 whether the temperature of water of the hot water tank 150 heated by the heater 153 is 85°C or more, and if it is determined that the temperature of water of the hot water tank 150 is 85°C or under, heating is kept. However, if it is determined that temperature of water of the hot water tank 150 is 85°C or more, heating stops.

In the state where the water is supplied to the multi-function cooking utensil according to the present invention at step S50, the convenient food is purchased by the user and is put in a disposable container (aluminum container or the like) or metal cooking container. Next, the cooking container in which the convenient food is put is located on top of the cooking unit body 210 of the cooking unit 200, and it is determined by the main controller 310 whether the cooking container is located on the cooking unit body 210. If it is determined that the cooking container is not located on the cooking unit body 210, it is checked whether the cooking container is located thereon at intervals of given time periods.

If it is determined by the main controller 310 that the cooking container is located on the cooking unit body 210, it is determined by the main controller 310 whether a cooking mode is set by the user's manipulation through the button part 320 at step S70.

If the cooking container is located on the cooking unit body 210, safe lock is released by the main controller 310 to allow the button part 320 to be manipulated by the user at the step S70.

If the cooking button 321 and the start/stop button 322 are sequentially pressed by the user, the first solenoid valve 160 is driven by the previously stored program of the main controller 310 according to the cooking mode set by the user, so that the hot water in the hot water tank 150 can be supplied to the cooking container through the discharge valve 113 at step S80.

The hot water is supplied to the cooking container through the discharge valve 113, and at the same time, power is applied to the heating part 220 disposed on the cooking unit body 210 under the control of the main controller 310, thereby carrying out the food cooking by means of the electromagnetic induction heating at step S90.

Further, the power is supplied to the heating part 220, so that the food cooking is carried out at step S100, and at the same time, the ventilation fan 190 disposed inside the utensil body 110 is driven to prevent the water vapor generated during the food cooking from being introduced into the discharge valve 113 at step S110.

In the state where the purified water supply, heating, and blowing are carried out, instant cooking for the food put inside the cooking container is carried out for a given period of time by the previously stored program of the main controller 310 at step S120.

Hereinafter, an explanation on the general cooking process will be given. The general cooking is divided into a method for cooking food through the discharge of purified water and a method for cooking food through the discharge of hot water.

First, the method for cooking food through the discharge of purified water will be explained.

In the state where the cooking mode is not set by the user at the step S70, if the cooking container is put on the cooking unit body 210, the cooking container put on the cooking unit body 210 is recognized by the sensor 330, and the signal generated by recognizing the cooking container is applied from the sensor 330 to the main controller 310 at step S60.

The safe lock is released by the main controller 310 to allow the button part 320 to be activated by the user, and in this state, it is determined by the main controller 310 whether the button part 320 for discharging the purified water is touched at step S130.

It is determined by the main controller 310 whether the purified water button 327 of the button part 320 is pressed by the user at the step S130, and if it is determined that the purified water button 327 is pressed, the purified water is discharged to the discharge valve 113 through the second solenoid valve 170 at step S132.

In the state where the discharge of the purified water to the discharge valve 113 is completed, it is determined by the main controller 310 whether the start/stop button 322 is touched by the user, and if it is determined that the start/stop button 322 is not touched, it is checked by the main controller 310 whether the start/stop button 322 is touched by the user.

In the state where the discharge of the purified water is completed, if it is determined by the main controller 310 that the start/stop button 322 is touched by the user, an electrical signal is applied from the main controller 310 to the heating part controller 340 to allow the food in the cooking container to be cooked.

If the electrical signal is applied to allow the heating part 220 disposed on the cooking unit body 210 to be driven at step S160, an electric current is applied to the coils 230 of the heating part 220 to carry out the food cooking through the electromagnetic induction heating.

The main controller 310 enables the food to be cooked through the heating part 220 and at the same time applies electric current to the ventilation fan 190 disposed in the utensil body 110 to prevent the discharge valve 113 from being contaminated with the water vapor generated while the food in the cooking container is being cooked.

In the state where the electrical signal is applied to the heating part 220 and the ventilation fan 190 from the main controller 310, the food in the cooking container starts to be cooked at step S180.

Now, the method for cooking food through the discharge of hot water will be explained.

If the cooking container is put on the cooking unit body 210, the cooking container put on the cooking unit body 210 is recognized by the sensor 330, and the signal generated by recognizing the cooking container is applied from the sensor 330 to the main controller 310 at the step S60.

The safe lock is released by the main controller 310 to allow the button part 320 to be activated by the user to discharge hot water at step S140.

At the step S140, the safe lock is released by the main controller 310 to discharge hot water in the state where the cooking container is recognized, thereby activating the button part 320 at step S141.

In the state where the button part 320 is activated, it is determined by the main controller 310 whether the hot water button 323 is touched at step S142.

If it is determined by the main controller 310 that the hot water button 323 is pressed by the user, the main controller 310 applies a signal to the first solenoid valve 160 to discharge the hot water stored in the hot water tank 150 through the discharge valve 113 at step S143.

In the state where the discharge of the hot water to the discharge valve 113 is completed, it is determined by the main controller 310 whether the start/stop button 322 is touched by the user, and if it is determined that the start/stop button 322 is not touched, it is checked by the main controller 310 whether the start/stop button 322 is touched by the user.

In the state where the discharge of the hot water is completed, if it is determined by the main controller 310 that the start/stop button 322 is touched by the user, an electrical signal is applied from the main controller 310 to the heating part controller 340 to allow the food in the cooking container to be cooked.

If the electrical signal is applied to allow the heating part 220 disposed on the cooking unit body 210 to be driven at the step S160, an electric current is applied to the coils 230 of the heating part 220 to carry out the food cooking through the electromagnetic induction heating.

The main controller 310 enables the food to be cooked through the heating part 220 and at the same time applies current to the ventilation fan 190 disposed in the utensil body 110 to prevent the discharge valve 113 from being contaminated with the water vapor generated while the food in the cooking container is being cooked.

In the state where the electrical signal is applied to the heating part 220 and the ventilation fan 190 from the main controller 310, the food in the cooking container starts to be cooked at the step S180.

As described above, the multi-function cooking utensil having a water purifying function according to the present invention is configured to have the program stored therein to allow the instant cooking and the ramen cooking to be selected by the user, so that the amount of water to be poured and the heating time are adjusted by the simple button manipulations of the user, thereby easily cooking the instant food or ramen.

According to the present invention, further, the button part is not manipulated since it is in a deactivated state in the state where the cooking container is not placed on the cooking unit body, and only in the state where the cooking container is placed on the cooking unit body, the button part is activated and manipulated, thereby permitting the cooking utensil to be safely used.

While the present invention has been described with reference to the particular illustrative embodiments, it is not to be restricted by the embodiments but only by the appended claims. It is to be appreciated that those skilled in the art can change or modify the embodiments without departing from the scope of the claims.

## Claims

1. A multi-function cooking utensil having a water purifying function, comprising:
a water supply unit (100) for feeding the water supplied from a tap or water bottle as hot water or purified water according to a user's selection to allow food to be cooked with the hot water or purified water;
a cooking unit (200) adapted to cook the food with the water fed to a cooking container and located on the underside of the water supply unit (100) to prevent the user from being burned due to residual heat after food cooking; and
a control unit (300) disposed on the water supply unit (100) and the cooking unit (200) to control water supply and heating time and temperature for cooking the food in the cooking container,
wherein the cooking unit (200) comprises:
a cooking unit body (210) having a shape of a flat plate to locate the utensil body (110) on top thereof, having tempered glass or heat resistant glass disposed on one side thereof to place the cooking container thereon, having a given space formed at the inside thereof, and being open on one side thereof;
a cooking unit cover (211) detachably disposed on the open portion of the cooking unit body (210); and
a heating part (220) disposed inside the cooking unit body (210) and comprising a circular support plate (221) disposed under the cooking unit body (210) and having support pieces (222), fixing pieces (223), and coupling grooves (224); and coil fixing holes (225), coils (230) located on top of the support plate (221) to cook the food in the cooking container through electromagnetic induction heating, fixing plates (231) located on tops of the coils (230) in such a manner as to be coupled to the support plate (221), and ferrite cores (240) insertedly disposed on the underside of the support plate (221).

2. The multi-function cooking utensil according to claim 1, wherein the water supply unit (100) comprises:
a utensil body (110) having a given space formed at the inside thereof in such a manner as to be open on one side thereof and having a discharge valve (113) disposed on the front surface thereof to supply water;
a body cover (111) detachably mounted on the open portion of the utensil body (110) and having a plurality of nipples (114) adapted to couple hoses thereto so as to connect the hoses to the tap or the water bottle;
a plurality of filters (120) disposed on one side of the body cover (111) by means of a filter clip (121) to purify the water;
a distributor (130) connected to the filters (120) to dividedly supply the water supplied through the filters (120) to the discharge valve (113) to the form of purified water or hot water;
a water storage tank (140) located inside the utensil body (110) to store the water supplied from the filters (120) through the distributor (130) by a given amount;
a hot water tank (150) located under the water storage tank (140) in such a manner as to store the water supplied from the water storage tank (140) by a given amount and having a heater (153) adapted to heat the water stored therein;
a first solenoid valve (160) adapted to supply the hot water supplied from the hot water tank (150) to the discharge valve (113) to cook the food; and
a second solenoid valve (170) disposed inside the utensil body (110) in such a manner as to be located between the discharge valve (113) and the distributor (130) to supply the water from the filters (120) and the distributor (130) to the discharge valve (113) and having a pressure control valve (171) mounted thereon.

3. The multi-function cooking utensil according to claim 2, wherein the filter clip (121) comprises:
a flat panel (122) fixed to one side of the body cover (111) by means of bolts; and
a plurality of 'Ω'-shaped clip members (123) disposed on one side of the flat panel (122) to fix the filters (120) thereto.

4. The multi-function cooking utensil according to claim 1, wherein the water supply unit (100) supplies the water supplied from the pressure of the tap or from the water bottle by means of a pump (180) to the water storage tank (140) through the filters (120) and the distributor (130), stores the water by the given amount in the water storage tank (140), heats the water in the hot water tank (150), and selectively supplies the hot water fed from the hot water tank (150) to the cooking container through the first solenoid valve (160) and the discharge valve (113) and the water purified through the filters (120) and the distributor (130) and reduced in pressure through the second solenoid valve (170) and the pressure control valve (171) to the discharge valve (113).

5. The multi-function cooking utensil according to claim 1, wherein the utensil body (110) comprises a ventilation fan (190) adapted to prevent the water vapor generated from the food during cooking from being introduced into the discharge valve (113), the ventilation fan (190) being electrically connected to a main controller (310) of the control unit (300) so that blowing occurs toward the front surface of the utensil body (110) only when power is applied to the heating part (220).

6. The multi-function cooking utensil according to claim 1, wherein the control unit (300) comprises:
the main controller (310) for carrying out cooking container existence/nonexistence checking, the control of the first solenoid valve (160) or the second solenoid valve (170) adapted to supply purified water or hot water, and the control of the heater (153) so as to cook the food if a button part (320) disposed on the front surface of the utensil body (110) is manipulated by the user;
the button part (320) disposed on the front surface of the utensil body (110) and having a cooking button (321), an instant cooking button (321-2), a general cooking button (321-1), a start/stop button (322), a hot water button (323), a purified water button (327), a time adding button (325), and a display (326);
a sensor (330) disposed on the front surface of the utensil body (110) in such a manner as to be electrically connected to the main controller (310) to check whether the cooking container is located on the heating part (220) and thus to allow the button part (320) to be activated or deactivated; and
a heating part controller (340) electrically connected to the main controller (310) to control the heating part (220) for food cooking,
wherein the main controller (310) is formed of a PCB located inside the utensil body (110) and the heating part controller (340) is formed of a PCB located inside the cooking unit body (210).

## Patentansprüche

1. Multifunktionskochutensil mit einer Wasserreinigungsfunktion, aufweisend:
eine Wasserzufuhreinheit (100) zum Zuführen von dem Wasser als heißes Wasser oder gereinigtes Wasser entsprechend der Auswahl eines Benutzers, das von einem Wasserhahn oder einer Wasserflasche bereitgestellt wurde, um es Nahrung zu ermöglichen, mit dem heißen Wasser oder dem gereinigten Wasser gekocht zu werden;
eine Kocheinheit (200), die dazu eingerichtet ist, die Nahrung mit dem zu einem Kochbehälter zugeführten Wasser zu kochen, und die an der Unterseite der Wasserzufuhreinheit (100) angeordnet ist, um zu verhindern, dass sich der Benutzer aufgrund von Restwärme nach dem Kochen der Nahrung verbrennt; und
eine Steuereinheit (300), die an der Wasserzufuhreinheit (100) und der Kocheinheit (200) angeordnet ist, um die Wasserzufuhr und die Erwärmungsdauer und die Temperatur für das Kochen der Nahrung in dem Kochbehälter zu steuern,
wobei die Kocheinheit (200) aufweist:
einen Kocheinheitenkörper (210) mit einer Gestalt einer flachen Platte, um den Utensilkörper (110) an der Oberseite davon anzuordnen, mit einem vergüteten Glas oder wärmeresistenten Glas, das an einer Seite davon angeordnet ist, um den Kochbehälter darauf anzuordnen, wobei der Kocheinheitenkörper (210) einen vorgegebenen Raum hat, der an dessen Innenseite gebildet ist und an einer seiner Seiten offen ist;
eine Kocheinheitenabdeckung (211), die abnehmbar an dem offenen Abschnitt des Kocheinheitenkörpers (210) angeordnet ist; und
einen Heizteil (220), der in dem Kocheinheitenkörper (210) angeordnet ist und eine kreisförmige Tragplatte (221) aufweist, die unter dem Kocheinheitenkörper (210) angeordnet ist und Tragteile (222), Befestigungsteile (223) und Verbindungsnuten (224) aufweist; und Spulenbefestigungslöcher (225), Spulen (230), die oben auf der Tragplatte (221) angeordnet sind, um die Nahrung in dem Kochbehälter durch elektromagnetische Induktionserwärmung zu kochen, Befestigungsplatten (231), die oben auf den Spulen (230) derart angeordnet sind, dass sie mit der Tragplatte (221) verbindbar sind, und Ferritkerne (240), die an der Unterseite der Tragplatte (221) eingesetzt angeordnet sind.

2. Multifunktionskochutensil nach Anspruch 1, wobei die Wasserzufuhreinheit (100) aufweist:
einen Utensilkörper (110) mit einem gegebenen Raum, der an seiner Innenseite derart gebildet ist, dass er an einer seiner Seiten offen ist, und mit einem Abgabeventil (113), das an seiner Vorderfläche angeordnet ist, um Wasser zuzuführen;
eine Körperabdeckung (111), die abnehmbar an dem offenen Abschnitt des Utensilkörpers (110) angeordnet ist und eine Mehrzahl von Anschlussnippeln (114) hat, die dazu eingerichtet sind, Leitungen damit zu verbinden, um die Leitungen mit dem Wasserhahn oder der Wasserflasche zu verbinden;
eine Mehrzahl von Filtern (120), die an einer Seite der Körperabdeckung (111) mittels eines Filterclips (121) angeordnet sind, um das Wasser zu reinigen;
einen Verteiler (130), der mit den Filtern (120) verbunden ist, um das Wasser, das durch die Filter (120) zu dem Abgabeventil (113) geliefert wird, aufgeteilt zu verteilen, um das gereinigte Wasser oder das heiße Wasser zu bilden;
einen Wasserspeichertank (140), der im Inneren des Utensilkörpers (110) angeordnet ist, um das von den Filtern (120) durch den Verteiler (130) gelieferte Wasser zu einer vorgegebenen Menge zu speichern;
einen Heißwassertank (150), der unter dem Wasserspeichertank (140) derart angeordnet ist, dass das von dem Wasserspeichertank (140) gelieferte Wasser zu einer vorgegebenen Menge gespeichert wird, und der eine Heizeinrichtung (153) hat, die eingerichtet ist, um das darin gespeicherte Wasser zu erwärmen;
ein erstes Magnetventil (160), das dazu eingerichtet ist, das von dem Heißwassertank (150) zu dem Abgabeventil (113) zugeführte heiße Wasser zum Kochen der Nahrung zuzuführen; und
ein zweites Magnetventil (170), das innerhalb des Utensilkörpers (110) derart angeordnet ist, dass es zwischen dem Abgabeventil (113) und dem Verteiler (130) angeordnet ist, um das Wasser von den Filtern (120) und dem Verteiler (130) zu dem Abgabeventil (113) zuzuführen, und aufweisend ein daran montiertes Drucksteuerventil (171).

3. Multifunktionskochutensil nach Anspruch 2, wobei der Filterclip (121) aufweist:
eine flache Platte (122), die an einer Seite der Körperabdeckung (111) mittels Bolzen befestigt ist; und
eine Mehrzahl von "Ω"-geformten Clipelementen (123), die an einer Seite von der flachen Platte (122) angeordnet sind, um die Filter (120) daran zu befestigen.

4. Multifunktionskochutensil nach Anspruch 1, wobei die Wasserzufuhreinheit (100) das von dem Druck des Wasserhahns oder der Wasserflasche zugeführte Wasser mittels einer Pumpe (180) durch die Filter (120) und den Verteiler (130) zu dem Wasserspeichertank (140) zuführt, das Wasser zu einer vorgegebenen Menge in dem Wasserspeichertank (140) speichert, das Wasser in dem Heißwassertank (150) erwärmt und wahlweise das heiße Wasser, das dem Kochbehälter über das erste Magnetventil (160) und das Abgabeventil (113) von dem Heißwassertank (150) zugeführt wird, oder das über die Filter (120) und den Verteiler (130) gereinigte und über das zweite Magnetventil (170) und das Drucksteuerventil (171) druckreduzierte Wasser zu dem Abgabeventil (113) zuführt.

5. Multifunktionskochutensil nach Anspruch 1, wobei der Utensilkörper (110) ein Ventilationsgebläse (190) aufweist, das dazu eingerichtet ist, zu verhindern, dass Wasserdampf, der durch die Nahrung während des Kochens erzeugt wird, in das Abgabeventil (113) eindringt, wobei das Ventilationsgebläse (190) elektrisch mit einer Hauptsteuerung (310) der Steuereinheit (300) verbunden ist, so dass das Blasen zu der Vorderfläche des Utensilkörpers (110) hin nur auftritt, wenn Leistung auf den Heizteil (220) aufgebracht wird.

6. Multifunktionskochutensil nach Anspruch 1, wobei die Steuereinheit (300) aufweist:
die Hauptsteuerung (310) zum Ausführen einer Prüfung des Vorhandenseins/Nichtvorhandenseins eines Kochbehälters, wobei die Steuerung des ersten Magnetventils (160) oder des zweiten Magnetventils (170) dazu eingerichtet ist, gereinigtes Wasser oder heißes Wasser zuzuführen, und die Steuerung der Heizeinrichtung (153) dazu eingerichtet ist, die Nahrung zu kochen, wenn ein Knopfteil (320), der in der Vorderfläche des Utensilkörpers (110) angeordnet ist, durch einen Benutzer manipuliert wird;
wobei der Knopfteil (320), der an der Vorderfläche des Utensilkörpers (110) angeordnet ist, einen Kochknopf (321), einen Sofortkochknopf (321-2), einen Allgemeinkochknopf (321-1) einen Start/Stop-Knopf (322), einen Heißwasserknopf (323), einen Knopf für gereinigtes Wasser (327), einen Zeitadditionsknopf (325) und eine Anzeige (326) hat;
einen Sensor (330), der an der Vorderfläche des Utensilkörpers (110) derart angeordnet ist, dass er elektrisch mit der Hauptsteuerung (310) verbunden ist, um zu prüfen, ob der Kochbehälter auf dem Heizteil (220) angeordnet ist und daher dem Knopfteil (320) zu ermöglichen, aktiviert oder deaktiviert zu werden; und
eine Heizteilsteuerung (340), die elektrisch mit der Hauptsteuerung (310) verbunden ist, um den Heizteil (220) für das Kochen der Nahrung zu steuern,
wobei die Hauptsteuerung (310) auf einer gedruckten Leiterplatte gebildet ist, die innerhalb des Utensilkörpers (110) angeordnet ist und die Heizteilsteuerung (340) auf einer gedruckten Leiterplatte gebildet ist, die innerhalb des Kocheinheitenkörpers (210) angeordnet ist.

## Revendications

1. Ustensile de cuisson multifonction ayant une fonction de purification d'eau, comprenant :
une unité d'alimentation en eau (100) pour servir l'eau fournie par un robinet ou une bouteille d'eau sous forme d'eau chaude ou d'eau purifiée selon le choix d'un utilisateur pour permettre de cuire des aliments avec l'eau chaude ou l'eau purifiée ;
une unité de cuisson (200) adaptée pour cuire les aliments avec l'eau servie dans un récipient de cuisson et située sous l'unité d'alimentation en eau (100) pour empêcher l'utilisateur de se brûler avec la chaleur résiduelle présente après la cuisson des aliments ; et
une unité de commande (300) placée sur l'unité d'alimentation en eau (100) et l'unité de cuisson (200) pour régler l'alimentation en eau et le temps de chauffe et la température pour cuire les aliments dans le récipient de cuisson,
dans lequel l'unité de cuisson (200) comprend :
un corps d'unité de cuisson (210) ayant la forme d'une plaque plate pour positionner le corps d'ustensile (110) au sommet de celui-ci, ayant du verre trempé ou du verre résistant à la chaleur placé sur un côté de celui-ci pour poser le récipient de cuisson, ayant un espace donné formé à l'intérieur de celui-ci, et étant ouvert sur un côté de celui-ci ;
un couvercle d'unité de cuisson (211) placé de manière détachable sur la partie ouverte du corps d'unité de cuisson (210) ; et
une partie chauffante (220) placée à l'intérieur du corps d'unité de cuisson (210) et comprenant une plaque de support circulaire (221) placée sous le corps d'unité de cuisson (210) et ayant des pièces de support (222), des pièces de fixation (223) et des rainures de couplage (224) ; et des trous de fixation de bobines (225), des bobines (230) situées sur la plaque de support (221) pour cuire les aliments dans le récipient de cuisson par chauffage par induction électromagnétique, des plaques de fixation (231) situées sur les bobines (230) de manière à être couplées à la plaque de support (221), et des noyaux en ferrite (240) insérés sur le côté inférieur de la plaque de support (221).

2. Ustensile de cuisson multifonction selon la revendication 1, dans lequel l'unité d'alimentation en eau (100) comprend :
un corps d'ustensile (110) ayant un espace donné formé à l'intérieur de celui-ci de manière à être ouvert sur un côté de celui-ci et ayant un robinet de décharge (113) placé sur la surface avant de celui-ci pour distribuer de l'eau ;
un couvercle de corps (111) monté de manière détachable sur la partie ouverte du corps d'ustensile (110) et comportant une pluralité de mamelons (114) adaptés pour coupler des tuyaux à celui-ci afin de raccorder les tuyaux au robinet ou à la bouteille d'eau ;
une pluralité de filtres (120) placés d'un côté du couvercle de corps (111) au moyen d'une pince à filtre (121) pour purifier l'eau ;
un distributeur (130) connecté aux filtres (120) pour distribuer de manière séparée l'eau fournie à travers les filtres (120) au robinet de décharge (113) sous forme d'eau purifiée ou d'eau chaude ;
un réservoir de stockage d'eau (140) situé à l'intérieur du corps d'ustensile (110) pour stocker l'eau fournie à travers les filtres (120) via le distributeur (130) en une quantité donnée ;
un réservoir à eau chaude (150) placé sous le réservoir de stockage d'eau (140) de manière à stocker l'eau fournie par le réservoir de stockage d'eau (140) en une quantité donnée et comportant un élément chauffant (153) adapté pour faire chauffer l'eau qu'il contient ;
une première électrovanne (160) adaptée pour transmettre l'eau chaude fournie par le réservoir à eau chaude (150) au robinet de décharge (113) pour cuire les aliments ; et
une deuxième électrovanne (170) placée à l'intérieur du corps d'ustensile (110) de manière à être localisée entre le robinet de décharge (113) et le distributeur (130) pour fournir l'eau provenant des filtres (120) et du distributeur (130) au robinet de décharge (113) et sur laquelle est montée une vanne de régulation de pression (171).

3. Ustensile de cuisson multifonction selon la revendication 2, dans lequel la pince à filtre (121) comprend :
un panneau plat (122) fixé sur un côté du couvercle de corps (111) à l'aide de boulons ; et
une pluralité d'éléments de pince en forme de « Ω » (123) placés sur un côté du panneau plat (122) pour y fixer les filtres (120).

4. Ustensile de cuisson multifonction selon la revendication 1, dans lequel l'unité d'alimentation en eau (100) transmet l'eau fournie par la pression du robinet ou par la bouteille d'eau à l'aide d'une pompe (180) au réservoir de stockage d'eau (140) à travers les filtres (120) et le distributeur (130), stocke l'eau dans la quantité donnée dans le réservoir de stockage d'eau (140), fait chauffer l'eau dans le réservoir à eau chaude (150), et fournit de manière sélective l'eau chaude provenant du réservoir à eau chaude (150) au récipient de cuisson à travers la première électrovanne (160) et le robinet de décharge (113) et l'eau purifiée à travers les filtres (120) et le distributeur (130) et sous une pression réduite à travers la deuxième électrovanne (170) et la vanne de régulation de pression (171) vers le robinet de décharge (113).

5. Ustensile de cuisson multifonction selon la revendication 1, dans lequel le corps d'ustensile (110) comprend un ventilateur d'aération (190) adapté pour empêcher la vapeur d'eau produite par les aliments pendant la cuisson d'être introduite dans le robinet de décharge (113), le ventilateur d'aération (190) étant connecté électriquement à un contrôleur principal (310) de l'unité de commande (300) de telle manière qu'un soufflage se produit vers la surface avant du corps d'ustensile (110) seulement lorsqu'une alimentation électrique est appliquée à la partie chauffante (220).

6. Ustensile de cuisson multifonction selon la revendication 1, dans lequel l'unité de commande (300) comprend :
le contrôleur principal (310) pour réaliser un contrôle de l'existence ou non existence du récipient de cuisson, la commande de la première électrovanne (160) ou de la deuxième électrovanne (170) adaptée pour fournir de l'eau purifiée ou de l'eau chaude, et la commande de l'élément chauffant (153) afin de cuire les aliments si une partie de bouton (320) placée sur la surface avant du corps d'ustensile (110) est manipulée par l'utilisateur ;
la partie de bouton (320) placée sur la surface avant du corps d'ustensile (110) et comportant un bouton de cuisson (321), un bouton de cuisson instantanée (321-2), un bouton de cuisson générale (321-1), un bouton de marche/arrêt (322), un bouton d'eau chaude (323), un bouton d'eau purifiée (327), un bouton d'ajout de temps (325) et un afficheur (326) ;
un capteur (330) placé sur la surface avant du corps d'ustensile (110) de manière à être connecté électriquement au contrôleur principal (310) pour vérifier si le récipient de cuisson est placé sur la partie chauffante (220) et pour permettre ainsi à la partie de bouton (320) d'être activée ou désactivée ; et
un contrôleur de partie chauffante (340) connecté électriquement au contrôleur principal (310) pour commander la partie chauffante (220) pour la cuisson des aliments,
dans lequel le contrôleur principal (310) est formé d'une carte de circuit imprimé située à l'intérieur du corps d'ustensile (110) et le contrôleur de partie chauffante (340) est formé d'une carte de circuit imprimé située à l'intérieur du corps d'unité de cuisson (210).
